(19) Europäisches Patentamt
European Patent Office
Office européen des brevets

(11) **EP 1 377 812 B1**

(12) **EUROPÄISCHE PATENTSCHRIFT**

(45) Veröffentlichungstag und Bekanntmachung des Hinweises auf die Patenterteilung:
**04.05.2011  Patentblatt 2011/18**

(51) Int Cl.:
***G01N 19/00*** *(2006.01)*

(21) Anmeldenummer: **02759775.6**

(22) Anmeldetag: **22.03.2002**

(86) Internationale Anmeldenummer:
**PCT/EP2002/003211**

(87) Internationale Veröffentlichungsnummer:
**WO 2002/082058 (17.10.2002 Gazette 2002/42)**

(54) **VORRICHTUNG UND VERFAHREN ZUR BESTIMMUNG EINES REIBUNGSKOEFFIZIENTEN**

DEVICE AND METHOD FOR DETERMINING A FRICTION COEFFICIENT

DISPOSITIF ET PROCEDE POUR DETERMINER UN COEFFICIENT DE FRICTION

(84) Benannte Vertragsstaaten:
**BE CH FR GB IT LI NL**

(30) Priorität: **04.04.2001  DE 10116760**

(43) Veröffentlichungstag der Anmeldung:
**07.01.2004  Patentblatt 2004/02**

(73) Patentinhaber: **Underwriters Laboratories Inc**
**Northbrook, IL 60062-2096 (US)**

(72) Erfinder:
 • **KAMINSKI, Axel**
  **42929 Wermelskirchen (DE)**
 • **SALEWSKI, Klaus**
  **47807 Krefeld (DE)**

(74) Vertreter: **Seemann, Ralph et al**
**Patentanwälte Seemann & Partner**
**Ballindamm 3**
**20095 Hamburg (DE)**

(56) Entgegenhaltungen:
 EP-A- 0 476 747   EP-A- 0 504 699
 EP-A- 0 758 745   DD-A- 223 820
 US-A- 4 051 713   US-A- 4 712 418

 • **PATENT ABSTRACTS OF JAPAN vol. 1997, no. 05, 30. Mai 1997 (1997-05-30) & JP 09 005230 A (SUMITOMO HEAVY IND LTD), 10. Januar 1997 (1997-01-10)**
 • **DEARNLEY P A: "Low friction surfaces for plastic injection moulding dies - an experimental case study" PROCEEDINGS OF THE 1999 12TH INTERNATIONAL CONFERENCE ON WEAR OF MATERIALS, WOM-99; ATLANTA, GA, USA APR 25-APR 29 1999, Bd. 225, Nr. II, 1999, Seiten 1109-1113, XP002212924 Wear; Wear 1999 Elsevier Sequoia SA, Lausanne, Switzerland**
 • **MENGES GEORG ET AL: "MEASUREMENT OF COEFFICIENTS OF STATIC FRICTION AS A MEANS OF DETERMINING OPENING AND DEMOULDING FORCES IN INJECTION MOULDS" KUNSTST GER PLAST SEP 1981, Bd. 71, Nr. 9, September 1981 (1981-09), Seiten 552-557, XP001099172**
 • **KAMINSKI A: "MEASUREMENT AND COMPUTATION OF EJECTION FORCES OF GEOMETRICALLY SIMPLE MOULDINGS" KUNSTST GER PLAST APR 1976, Bd. 66, Nr. 4, April 1976 (1976-04), Seiten 208-214, XP001099184**
 • **PATENT ABSTRACTS OF JAPAN vol. 017, no. 654 (P-1653), 3. Dezember 1993 (1993-12-03) & JP 05 215668 A (SUMITOMO BAKELITE CO LTD), 24. August 1993 (1993-08-24)**

EP 1 377 812 B1

**Beschreibung**

Die Erfindung betrifft eine Vorrichtung und ein Verfahren zur Bestimmung eines Reibungskoeffizienten. Ferner betrifft die Erfindung eine Anwendung eines Verfahrens zur Bestimmung eines Reibungskoeffizienten zur Ermittlung der zur Entformung eines Formteiles aus einem Spritzgießwerkzeug erforderlichen Kraft.

Im Dokument P.A. Dearnley, "Low friction surfaces for plastic injection moulding dies - an experimental case study", WEAR 225-229 (1999), Seiten 119-1113, wurden Oberflächen mit niedrigen Reibungskoeffizienten für Kunststoffspritzgusswerkzeuge untersucht.

Weiterhin sind in der Veröffentlichung von G. Menges et al., "Messung von Haftreibungskoeffizienten zur Ermittlung von Offnungs- und Entformungskräften bei Spritzgießwerkzeugen", Kunststoffe 71 (1981), 9, Seiten 552-557, Laborversuche mit einem Spritzgießwerkzeug offenbart. Hierbei ist in Bild 1 ein Backenwerkzeug für das Messen der Entformungskraft dargestellt, wobei das Backenwerkzeug über eine bewegliche und eine feste Formnesthälfte verfügt. Hierbei wurden mit dem eigens dafür entwickelten Spritzgießwerkzeug Haftreibungskoeffizienten unter Praxisbedingungen ermittelt.

Bei der Herstellung eines spritzgegossenen Formteiles ist es erforderlich, das Formteil aus dem Spritzgießwerkzeug zu entformen. Die Entformbarkeit des Formteils aus dem Spritzgießwerkzeug wird durch die Materialeigenschaft des verwendeten Kunststoffes bestimmt. Eine automatische Fertigung derartiger Formteile in hohen Stückzahlen setzt voraus, dass die Formteile unter den Produktionsbedingungen ohne Störungen einwandfrei entformt werden können. Die sichere Entformbarkeit der Formteile ist daher ein wichtiges Kriterium für die Auswahl zum Beispiel eines Thermoplasten für die Spritzgussfertigung.

Vor der Entformung des Formteils haftet dieses an der Wandung des Spritzgießwerkzeuges Die Höhe dieser Haftung wird durch den Haftreibungskoeffizienten charakterisiert. Bei der Entformung wird das Formteil von der Werkzeugwand des Spritzgießwerkzeuges losgebrochen. Die dafür notwendige "Losbrechkraft" ist umso grösser, je höher der Haftreibungskoeffizient ist. Dieser stellt also ein Maß für die Entformbarkeit des Formteiles dar : Je niedriger der Haftreibungskoeffizient zwischen Formteil und Werkzeugwand ist, um so besser entformbar ist das Formteil.

Aus dem Stand der Technik sind Verfahren bekannt, um die Entformbarkeit von Formteilen aus Thermoplasten zu bestimmen. Ein übliches Verfahren ist, Hülsen zu spritzen, die während der Abkühlphase auf den Werkzeugkern aufschrumpfen und dadurch eine nicht näher definierbare Normalkraft erzeugen. Das Spritzgießwerkzeug wird nach Beendigung der Abkühlphase geöffnet und die Hülse wird vom zylindrischen Kern des Werkzeugs, auf dem die Hülse haftet, mittels eines ringförmigen Auswerfers abgestreift. Dabei werden die für das Entformen erforderlichen Kräfte aus den maximalen Drücken bestimmt, die die Hydraulik der Auswerfereinheit auf den Auswerfer ausübt. Aus diesen Entformungskräften können jedoch keine eindeutigen Haftreibungskoeffizienten berechnet werden, da die Normalkraft der Hülse auf den Werkzeugkern nicht gleichmäßig verteilt ist sondern örtlich variiert.

Nachteilig bei den vorbekannten Verfahren ist ausserdem, dass die Messung der Haftreibungskoeffizienten in starkem Maße von der Geometrie des betreffenden Formteiles und von verschiedenen weiteren Verarbeitungsparametern wie der Höhe des Nachdruckes, der Länge der Kühlzeit, der Höhe der Werkzeugwandtemperatur und der Geschwindigkeit der Entformung des Formteiles abhängt. Auch bei plattenförmigen Spritzlingen wird keine gleichmässige Übertragung einer Normalkraft aufgrund von Einfallstellen im Plattenzentrum erreicht. Diese vorbekannte Verfahren ermöglichen es daher nicht, Haftreibungskoeffizienten unabhängig von den genannten Randbedingungen zu messen.

Der Erfindung liegt daher die Aufgabe zu Grunde eine verbesserte Vorrichtung und ein verbessertes Verfahren zur Bestimmung eines Reibungskoeffizienten zu schaffen sowie ein verbessertes Verfahren zur Entformung von Formteilen.

Diese Aufgabe wird jeweils mit den Merkmalen der unabhängigen Patentansprüche gelöst. Bevorzugte Ausführungsformen sind in den abhängigen Patentansprüchen angegeben.

Die Erfindung ermöglicht die präzise Ermittlung von Haft- und Gleitreibungskoeffizienten unterschiedlicher Materialien. Die ermittelten Haft- und Gleitreibungskoeffizienten stellen allgemein gültige Kenngrößen der jeweiligen Paarung Thermoplast/Stahl des Formstempels dar. Dadurch lassen sich unter Berücksichtigung der Normalkraft eines konkreten Formteiles konkrete Aussagen zur Entfonnbarkeit beliebiger spritzgegossener Formteile sowie über die Höhe der erforderlichen "Losbrechkraft" treffen.

Die Bestimmung der Reibungskoeffizienten kann unter den gleichen Bedingungen, unter denen auch die Entformung der Formteile in der Produktion stattfindet, erfolgen. Die Erfindung ermöglicht die Haft- und Gleitreibungskoeffizienten zwischen Formteilen und Werkzeugwand unmittelbar vor der Entformung des Formteiles zu messen, und zwar unabhängig von der Geometrie des Formteiles und unter eindeutig definierten Spritzgießparametern. Die ermittelten Reibungskoeffizienten stellen daher ein allgemeingültiges und objektives Maß für die Beurteilung der Entformbarkeit von Formteilen dar.

Nach einer bevorzugten Ausführungsform besteht die für die Durchführung des Meßverfahrens verwendete Vorrichtung aus einer Antriebs- und einer Meßeinheit. In der Antriebseinheit wirkt ein stufenlos in seiner Drehzahl einstellbarer Elektromotor über ein Getriebe auf einen Zahnriemenantrieb.

Die Meßeinheit ist in das Spritzgießwerkzeug integriert. Die angußseitige Kavität des Spritzgießwerkzeugs ist der sogenannte Mitnehmer. Er kann durch den Zahnriemenantrieb der Antriebseinheit in eine Drehbewegung versetzt werden. Die andere Hälfte der Kavität des Spritzgießwerkzeuges bildet der Formstempel. Dieser kann horizontal verschoben werden. Er ist über einen Normalkraftaufnehmer starr mit einem Pneumatikzylinder verbunden. Des Weiteren kann der Formstempel Drehbewegungen auf einen Drehmomentaufnehmer übertragen. Mitnehmer, Formstempel und Anguß- und Kontureinsätze können einzeln und getrennt mit Wasser und/oder Öl temperiert werden.

Bei einer Ausführungsform des erfindungsgemäßen Verfahrens werden der Haft- und/oder der Gleitreibungskoeffizient zwischen dem Prüfkörper und dem Formstempel gemessen. Die Herstellung des Prüfkörpers geschieht dadurch, dass der zu untersuchende Kunststoff - zum Beispiel ein aufgeschmolzener Thermoplast - in die durch den Mitnehmer und den Formstempel gebildete Werkzeugkavität gespritzt wird. Nach der Erstarrung des Kunststoffes in der Werkzeugkavität erfolgt die Messung.

Bei dem Prüfkörper kann es sich um eine Rundplatte mit einem gezahnten Rand handeln. Der Durchmesser kann dabei beispielsweise 95 mm und die Dicke 2,5 mm betragen.

Während der Erstarrung der Kunststoffschmelze bleibt der Kontakt der Oberfläche des Prüfkörperspritzling zum Formstempel durch die Wirkung des mit dem Formstempel gekoppelten Pneumatikzylinders erhalten. Vorzugsweise wird der Anguß des Prüfkörpers durch eine Bewegung des Mitnehmers vor der Durchführung der eigentlichen Messung abgerissen.

Vorzugsweise wird der Mitnehmer zusammen mit dem in ihm befindlichen Prüfkörper durch den Zahnriemenantrieb der Antriebseinheit um einen bestimmten Winkel von zum Beispiel 37° verdreht. Infolge der Haftreibung zwischen Prüfkörper und Stempel wird dabei ein Drehmoment auf den Formstempel übertragen. Dieses wird vom Drehmomentaufnehmer registriert. Anschließend wird das Spritzgießwerkzeug vollständig aufgefahren, der Prüfkörper mittels Auswerferstiften ausgeworfen und dann das Spritzgießwerkzeug wieder geschlossen. Dabei wird der Mitnehmer in seiner Ausgangsposition zurückgedreht. Danach kann die Herstellung eines weiteren Prüfkörpers erfolgen.

Vor der Drehung des Prüfkörpers haftet dieser an dem Formstempel. Durch die Drehung wird diese Verbindung gelöst. Das dafür notwendige Drehmoment M wird vom Drehmomentaufnehmer registriert. Aus diesem Drehmoment, dem mittleren Radius r des Prüfkörpers und der vom Formstempel auf den Prüfkörper wirkenden Normalkraft F, die am Pneumatikzylinder über den Normalkraftaufnehmer eingestellt werden kann, wird der Reibungskoeffizienz $\mu$ gemäß der Gleichung

$$\mu = M / (r * F)$$

berechnet. Während der Drehung des Prüfkörpers verändert sich das auf den Formstempel übertragene Drehmoment. Wird der Drehmomentaufnehmer an einen Datalogger, der den zeitlichen Verlauf der Veränderung des Drehmomentes graphisch aufzeichnet, angeschlossen, so ergibt sich ein charakteristischer Verlauf. Das auf den Formstempel vom Prüfkörper übertragene Drehmoment steigt zunächst steil an, erreicht beispielsweise ein sehr ausgeprägtes Maximum und fällt dann auf einen beispielsweise weitgehend konstanten Endwert ab. Das maximale Drehmoment entspricht dem Haftreibungskoeffizienten, das niedrigere, weitgehend konstante Enddrehmoment dem Gleitreibungskoeffizienten.

Bei Erreichen des maximalen Drehmoments wird die adhäsive Verbindung zwischen Formstempel und Prüfkörper aufgebrochen. Das gleiche erfolgt auch bei der Entformung von Formteilen. Demgemäß stellt der sich aus dem maximalen Drehmoment ergebende Haftreibungskoeffizient ein Maß für die Entformbarkeit von Formteilen dar.

Überraschenderweise hat es sich gezeigt, dass die nach dem erfindungsgemäßen Verfahren ermittelten Haft- und Gleitreibungskoeffizienzen weitgehend unabhängig sind von den jeweiligen Spritzgießbedingungen, insbesondere unabhängig von der Höhe und Dauer des Nachdrucks. Ebenfalls überraschend ist, dass die Reibungskoeffizienten auch von den Prüfbedingungen, also von dem Niveau der auf den Prüfkörper wirkenden Flächenpressung und von der Winkelgeschwindigkeit der Drehbewegung des Prüfkörpers unabhängig sind. Das bedeutet, dass die nach dem erfindungsgemäßen Verfahren ermittelten Haft- und Gleitreibungskoeffizienten allgemeine Kenngrößen der jeweiligen Paarung Kunststoffmaterial/Stahl des Formstempels sind.

Die Erfindung erlaubt es also die tatsächlichen Reibungskoeffizienten unabhängig von der spezifischen Geometrie der Formteile und den spezifischen Meßbedingungen zu bestimmen.

Im Weiteren wird die Erfindung anhand eines bevorzugten Ausführungsbeispiels näher erläutert. Es zeigen

Fig. 1 eine Ausführungsform der erfindungsgemäßen Vorrichtung,

Fig. 2 einen mit der Vorrichtung der Fig. 1 gemessenen zeitlichen Drehmoment- verlauf,

Fig. 3 einen entsprechenden Drehmomentverlauf bei einer bestimmten Werkzeugtemperatur,

Fig. 4 einen Verlauf von gemessenen Haft- und Gleitreibungskoeffizienten in Abhängigkeit von der Werkzeugtemperatur,

Fig. 5 den Verlauf der mit der Vorrichtung der Fig. 1 bestimmten Haft- und Gleitreibungskoeffizienten in Abhängigkeit von der Flächenpressung, und

Fig. 6 einen mit der Vorrichtung der Fig. 1 herstellbaren Prüfkörper.

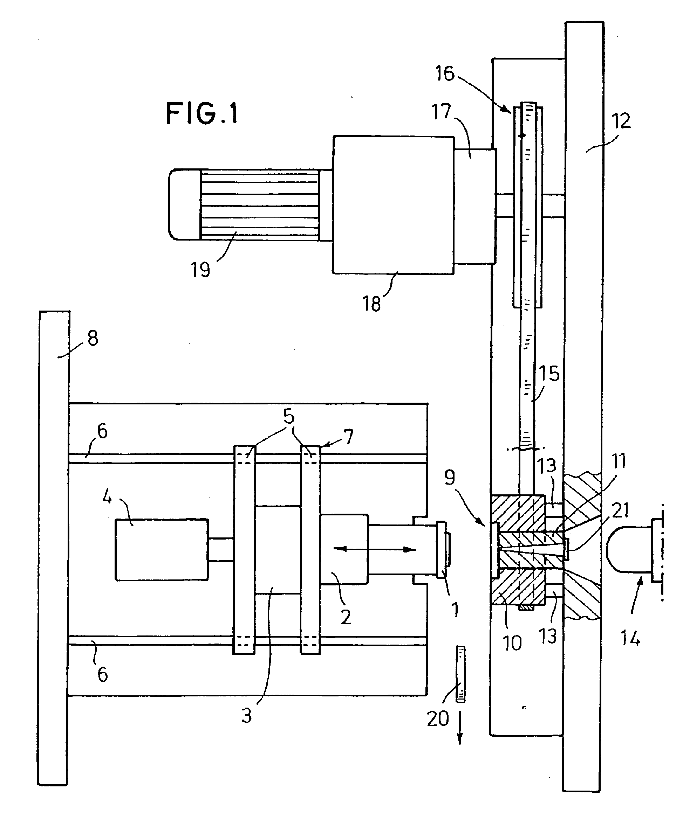

Die Fig. 1 zeigt eine Vorrichtung zur Bestimmung von Haft- und Gleitreibungskoeffizienten. Zu der Vorrichtung gehören ein Formstempel 1, der mit einem Drehmomentaufnehmer 2 in Verbindung steht. Hinter dem Drehmomentaufnehmer 2 ist ein Normalkraftaufnehmer 3 angeordnet. Über einen Pneumatikzylinder 4 kann eine Kraft auf den Formstempel 1 ausgeübt werden.

Die aus dem Formstempel 1, dem Drehmomentaufnehmer 2, dem Normalkraftaufnehmer 3 und dem Pneumatikzylinder 4 bestehende Anordnung wird durch axial gelagerte Führungen 5 gehalten. Die entsprechenden Führungsholme 6 dienen zur Führung der Führungen 5 sowie zur Aufnahme eines von dem Formstempel 1 auf den Drehmomentaufnehmer 2 übertragenen Drehmoments. Die völlige Aufnahme dieses Drehmoments durch die Führungsholme ist dann erforderlich, wenn der Normalkraftaufnehmer 3 keinen Radialkräften ausgesetzt werden darf.

Die Führungsholme 6 sind an einer Aufspannplatte 8 befestigt. Über eine in der Fig. 1 nicht dargestellte Hydraulik kann auf den Formstempel 1 für das Kunststoffspritzgießen ein hoher Druck ausgeübt werden.

Zu der Vorrichtung gehört ferner ein Formnest 9, welches zusammen mit dem Formstempel 1 ein Kunststoffspritzgießwerkzeug bildet. Zu dem Formnest 9 gehören ein Mitnehmer 10 und eine Angussbuchse 11. Der Mitnehmer 10 und die Angussbuchse 11 sind relativ zueinander in Längsrichtung beweglich; dazu kann zwischen dem Mitnehmer 10 und der Angussbuchse 11 ein Kugel- oder Gleitlager angeordnet sein. Zwischen dem Mitnehmer 10 und einer Aufspannplatte 12 befinden sich elastische Elemente 13, beispielsweise Tellerfedern.

Über eine Plastifiziereinheit 14 kann über die Angussbuchse 11 flüssiger Kunststoff in das geschlossene Kunststoffspritzgießwerkzeug eingeführt werden.

Der Mitnehmer 10 ist zur Aufnahme eines Zahnriemens 15 ausgebildet, der über eine Zahnriemenscheibe 16 über eine Kupplung 17 und ein Getriebe 18 mit einem Elektromotor 19 verbunden ist.

Die Durchführung einer Messung eines Haft- und/oder Gleitreibungskoeffizienten wird folgendermaßen durchgeführt: Zunächst wird das Spritzgießwerkzeug geschlossen, d.h. der Formstempel 1 wird in sein Formnest 9 eingefahren. Dabei werden die elastischen Elemente 13 zwischen dem Mitnehmer 10 und der Aufspannplatte 12 zusammengedrückt. Über die Angussbuchse 11 wird flüssiger Kunststoff in das Spritzgießwerkzeug von der Plastifiziereinheit 14 eingespritzt, wobei - wie bei Kunststoffspritzmaschinen allgemein üblich - über die in der Fig. 1 nicht gezeigte Hydraulik hohe Drücke wirken.

Durch das Einspritzen des flüssigen Kunststoffs in das Spritzgießwerkzeug wird dort ein Prüfkörper aus dem zu untersuchenden Kunststoffmaterial gebildet. Die eigentliche Bestimmung der Haft- und/oder Gleitreibungskoeffizienten kann nach Ablauf einer erforderlichen Kühlzeit, d.h. nach dem Erstarren des Kunststoffes in dem Spritzgießwerkzeug durchgeführt werden.

Dazu wird zunächst der Formstempel 1 um eine geringe Distanz, zum Beispiel 2 mm, zurückbewegt. Dieser Bewegung des Formstempels 1 folgt der Mitnehmer 10 aufgrund der in die Bewegungsrichtung des Formstempels wirkenden Kraft der elastischen Elemente 13. Bei dieser Bewegung des Kunststoffspritzgießwerkzeuges bleibt der Formschluß zwischen dem Formstempel 1 und dem Formnest 9 zu jedem Zeitpunkt erhalten, so dass der Kontakt zwischen dem Prüfkörper 20 und dem Formstempel 1 bestehen bleibt.

Bei der Bewegung des Mitnehmers 10 in Längsrichtung bleibt die Angussbuchse 11 ortsfest, so dass der bei dem Kunststoffspritzgießvorgang entstandene Anguß 21 von dem in dem Spritzgießwerkzeug befindlichen Prüfkörper 20 abreisst. Das Abtrennen des Anguß 21 von dem Prüfkörper 20 vor Durchführung der Messungen ist vorteilhaft, um eine Verfälschung des Meßergebnisses durch den Anguß 21 zu vermeiden.

Zur Durchführung der Messung der Haft- und/oder Gleitreibungskoeffizienten des Prüfkörpers 20 in dem Kunststoffspritzgießwerkzeug wird zunächst eine Normalkraft auf den Formstempel 1 aufgebracht, um den Formstempel 1 gegen den Prüfkörper 20 zu drücken. Die von dem Pneumatikzylinder 4 aufgebrachte Normalkraft kann dabei in einem Bereich zwischen 300 und 3000 N, vorzugsweise 1500 bis 3000 N liegen. Nachdem Anlegen der Normalkraft wird der Elektromotor 19 eingeschaltet um ein Drehmoment über das Getriebe 18, die Kupplung 17, die Zahnriemenscheibe 16 und den Zahnriemen 15 über den Mitnehmer 10 auf den Prüfkörper 20 zu übertragen. Zur sicheren Übertragung dieses Drehmoments auf den Prüfkörper 20 befindet sich dieser vorzugsweise in Formschluß mit dem Teil der Kavität des Spritzgießwerkzeuges, welches durch den Mitnehmer 10 gebildet wird. Das Getriebe 18 hat vorzugsweise eine Übersetzung von 1 zu 200 um das erforderliche Drehmoment zur Verfügung zu stellen.

Durch das Drehmoment erfährt der Prüfkörper 20 eine definierte Drehbewegung um zum Beispiel 37° um dessen Mittelachse. Bei dieser Drehbewegung wird das auf den Prüfkörper 20 wirkende Drehmoment auf den Formstempel 1 ganz oder teilweise übertragen. Das übertragende Drehmoment wird von dem Drehmomentaufnehmer gemessen und registriert. Dazu kann der Drehmomentaufnehmer 2 an einen sogenannten Datalogger angeschlossen sein, um den zeitlichen Verlauf des auf den Formstempel 1 von dem Prüfkörper 20 übertragenen Drehmoments zu erfassen. Bei der Drehung des Prüfkörpers 20 erfolgt dabei ein Übergang von der Haft- in die Gleitreibung, was sich in einem charakteristischen zeitlichen Drehmomentverlauf niederschlägt, der von dem Drehmomentaufnehmer 2 gemessen wird.

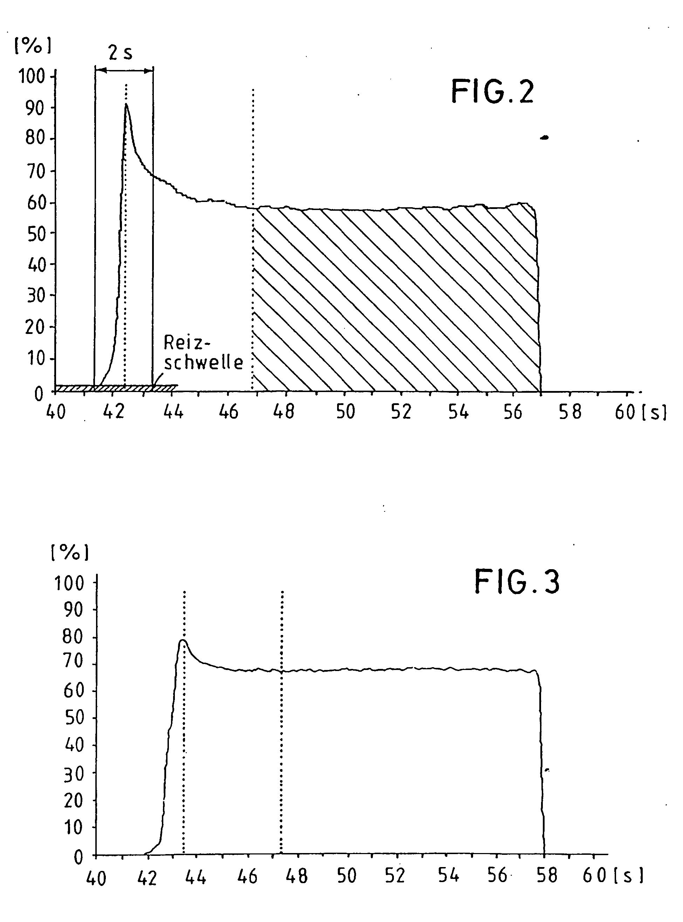

Die Fig. 2 zeigt einen charakteristischen Drehmomentverlauf der von dem Drehmomentaufnehmer 2 bei Durchführung einer Messung an dem Prüfkörper 20 (vergl. Fig. 1) ermittelt wird. Die Meßkurve der Fig. 2 zeigt den Verlauf des von dem Drehmomentaufnehmer 2 gemessenen Drehmoments in Prozent des maximalen Drehmoments über der Zeitachse. Nach Erreichung der sogenannten Reizschwelle steigt die Drehmomentkurve zunächst steil an, da sich der Formstempel 1 und der Prüfkörper 20 zunächst noch in dem Bereich der Haftreibung befinden. Die Drehmomentkurve erreicht ein ausgeprägtes Maximum - in dem gezeigten Beispiel bei ca. 90% Skalenteile ca. eine Sekunde nach Überschreitung der Reizschwelle. Das so ermittelte maximale Drehmoment sowie die über den Pneumatikzylinder 4 auf den Formstempel 1 aufgebrachte Normalkraft und der mittlere Radius r des Prüfkörpers 20 gehen in die Berechnung des Haftreibungskoeffizienten ein.

Nach Erreichung des maximalen Drehmoments fällt die Drehmomentkurve ab und erreicht dann den schraffiert gezeigten Bereich der Gleitreibung. Im Bereich der Gleitreibung liegt das übertragende Drehmoment bei ca. 60%. Entsprechend wird der Gleitreibungskoeffizient aus dem im Falle der Gleitreibung übertragenen Drehmoment sowie der Normalkraft und dem mittleren Radius r des Prüfkörpers 20 bestimmt. Nach Durchführung der Messung wird das Spritzgießwerkzeug geöffnet, d.h. der Formstempel 1 wird zurückgefahren und der Prüfkörper 20 wird aus dem Formnest 9 ausgestoßen - wie in Fig. 1 gezeigt. Danach wird das Kunststoffspritzgießwerkzeug wieder geschlossen um einen weiteren Prüfkörper 20 zur Durchführung einer weiteren Messung herzustellen. Vorteilhafterweise erfolgt dieselbe Messung unter den selben Randbedingungen und mit dem Kunststoffmaterial etwa fünf- bis zehnmal hintereinander. Die jeweils bestimmten Haft- und Gleitreibungskoeffizienten werden dann gemittelt, um die Genauigkeit des Meßergebnisses noch weiter zu erhöhen. Dies kann automatisch durch ein entsprechendes Auswertungsprogramm des Dataloggers erfolgen.

Die Fig. 3 zeigt ein Meßbeispiel entsprechend dem Diagramm der Fig. 2 welches für einen Prüfkörper aus Polycarbonat (Makrolon 2800) unter den folgenden Bedingungen in einer Vorrichtung gemäß der Fig. 1 gespritzt worden ist:

- Massetemperatur: 300°

- Werkzeugtemperatur: 90°

- Einspritzgeschwindigkeit: 40 mm/sec

- Nachdruck: 600 bar

Bei dem gespritzen Prüfkörper handelt es sich um eine 2,5 mm dicke, zentral angespritzte Rundplatte mit gezahnten Rand mit einem Durchmesser von 95 mm.

Der Zeitpunkt der Beendigung der Nachdruckphase wird durch Messung des Forminnendrucks mittels eines Druckfühlers in dem Spitzgießwerkzeug bestimmt. Nach der Beendigung der Nachdruckphase wurde der Formstempel 1 mittels des Pneumatikzylinders 4 (vergleiche Fig. 1) mit einer Normalkraft von 3.200 Newton gegen den Prüfkörper 20 gedrückt. Die Normalkraft wurde dabei mit Hilfe des Normalkraftaufnehmers mit einem Meßbereich von 0 bis 10 Kilo-Newton eingestellt.

Nach Beendigung der Plastifizierphase wurde die Düse der Plastifiziereinheit 14 vom Werkzeug abgefahren. Anschließend wurde das Spritzgießwerkzeug um 5 mm geöffnet, wobei der Anguß 21 durch den aus seinem Sitz gedrückten Mitnehmer 10 abgerissen wurde. Danach wurde der Mitnehmer und der sich in diesem befindliche Prüfkörper 20 mit Hilfe der Antriebseinheit des Elektromotors 19 mit einer Geschwindigkeit von 0,5 mm/sec (bezogen auf den mittleren Radius des Prüfkörpers) um einen Winkel von 37° gedreht.

Die dabei auf den Formstempel 1 übertragenen Drehmomente wurden von dem in die Meßvorrichtung integrierten Drehmomentaufnehmer 2 (Meßbereich 0 bis 200 Newtonmeter) mit Hilfe von Dehnungsmeßstreifen nach dem Prinzip der Widerstandsmessung gemessen und registriert. Die so erhaltenen Daten wurden auf den Datalogger übertragen, der den zeitlichen Verlauf der Drehmomente der Fig. 3 aufzeichnete. Aus dem Maximum der Drehmomentkurve ergibt sich ein Haftreibungskoeffizient von 0,515 und aus den zeitlich konstanten Endwerten des Drehmoments im Gleitreibungsbereich ein Gleitreibungskoeffizient von 0,439.

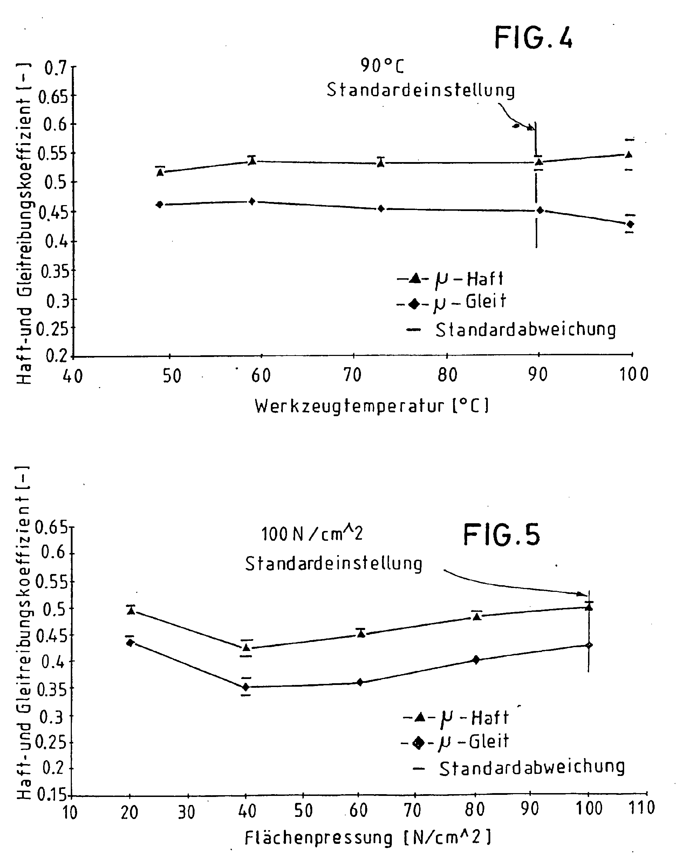

Die Fig. 4 zeigt die mit Hilfe der Meßanordnung Fig. 1 ermittelbaren Haft- und Gleitreibungskoeffizienten in Abhängigkeit von der Werkzeugtemperatur des Kunststoffspritzgießwerkzeuges. Die obere Kurve der Fig. 4 gibt dabei die gemessenen Haftreibungskoeffizienten und die untere Kurve die gemessenen Gleitreibungskoeffizienten an. Die Werkzeugtemperatur wurde in einem weiten Bereich zwischen 50° und 100° variiert. Aus dem Kurvenverlauf der Fig. 4 geht hervor, dass sowohl die Haft- als auch die Gleitreibungskoeffizienten weitgehend unabhängig von der Werkzeugtemperatur in der Vorrichtung der Fig. 1 bestimmbar sind.

Die Fig. 5 zeigt die Ergebnisse von mit der Vorrichtung der Fig. 1 durchgeführten Messungen bei unterschiedlichen Flächenpressungen. Der obere Kurvenverlauf der Fig. 5 gibt wiederum die ermittelten Haftreibungskoeffizienten, der untere Kurvenverlauf die Gleitreibungskoeffizienten an. Dazu wurden unterschiedliche Normalkräfte über dem Penumatikzylinder 4 auf den Prüfkörper 20 aufgebracht, so dass sich die unterschiedlichen Flächenpressungen ergeben.

Aus den Kurvenverläufen der Fig. 5 geht hervor, dass die Ermittlung der Reibungskoeffizienten in der Vorrichtung der Fig. 1 nur in geringem Maße durch die Höhe der Flächenpressung beeinflußt wird.

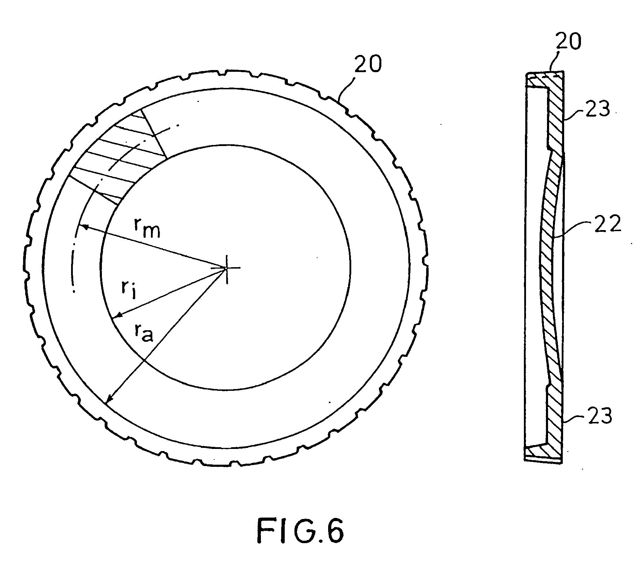

Die Fig. 6 zeigt eine vergrößerte Ansicht des Prüfkörpers 20 in Draufsicht und in einem seitlichen Schnitt. Der Prüfkörper 20 hat an seinem äußeren Umfang eine gezahnte Kontur, um einen sicheren Formfluß mit dem Mitnehmer 10 zur Übertragung des Drehmoments zu gewährleisten. In seinem mittleren Bereich hat der Prüfkörper 20 eine Wölbung 22. Die Wölbung 22 dient zur Erhöhung der Elastizität des Prüfkörpers, um Verformungen bei einem Schrumpfungsprozess bei der Abkühlung des Prüfkörpers zu unterbinden. Dadurch ist gewährleistet, dass der Prüfkörper 20 in dessen planaren Bereichen 23 flächig an der Oberfläche des Formstempels 1 anliegt. Der Bereich 23 hat einen inneren Radius r Index i und einen äußeren Radius r Index a, woraus sich ein mittlerer Radius r Index m ergibt, der für die Berechnung der Reibungskoeffizienten verwendet wird. Beispielsweise kann der Prüfkörper 20 einen Durchmesser von 95 mm, einen inneren Radius ri von 28 mm und einen Außenradius ra von 42 mm aufweisen.

Die Erfindung erlaubt also eine exakte und allgemeingültige Bestimmung der Haft- und Gleitreibungskoeffizienten zur präzisen Ermittlung der erforderlichen "Losbrechkraft" eines beliebigen Formteils aus dem Spritzgießwerkzeug. Dies stellt einen ganz wesentlichen Fortschritt gegenüber dem aus dem Stand der Technik bekannten Entformungshülsenverfahren dar, welches keine allgemeingültigen, sondern nur die formteil- und prozessspezifischen Entformungskräfte liefert.

## Bezugszeichenliste

1. Formstempel
2. Drehmomentaufnehmer
3. Normalkraftaufnehmer
4. Pneumatikzylinder
5. Führungen
6. Führungsholm
7. Führungsplatte
8. Aufspannplatte
9. Formnest
10. Mitnehmer
11. Angussbuchse
12. Aufspannplatte
13. Elastisches Element
14. Plastifiziereinheit
15. Zahnriemen
16. Zahnriemenscheibe
17. Kupplung
18. Getriebe
19. Elektromotor
20. Prüfkörper
21. Anguss
22. Wölbung
23. Planarer Bereich

## Patentansprüche

1. Vorrichtung zur Bestimmung eines Reibungskoeffizienten mit einem eine Kavität aufweisenden Spritzgießwerkzeug zur Aufnahme eines Prüfkörpers (20), wobei das Spritzgießwerkzeug einen Formstempel (1) und ein einen Mitnehmer (10) und eine Angussbuchse (11) aufweisendes Formnest (9) beinhaltet, so dass der Prüfkörper (20) in der durch den Mitnehmer (10), die Angussbuchse (11) und den Formstempel (1) gebildeten Kavität herstellbar ist, und mit Mitteln (4) zur Aufbringung einer Normalkraft auf einen Prüfkörper (20) über den Formstempel (1), Mitteln zur Beaufschlagung des Prüfkörpers mit einem Drehmoment über den Mitnehmer (10) und Mitteln (2) zur Messung des über den Prüfkörper auf den Formstempel übertragenen Drehmoments.

2. Vorrichtung nach Anspruch 1, bei der die Normalkraft von einer Pneumatik auf den Formstempel (1) übertragen wird.

3. Vorrichtung nach Anspruch 1 oder 2 mit Mitteln (3) zur Messung der Normalkraft.

4. Vorrichtung nach einem der vorhergehenden Ansprüche mit einer Datenerfassungseinrichtung zur Erfassung von durch die Mittel zur Messung gelieferten Drehmomentmessdaten.

5. Vorrichtung nach einem der vorhergehenden Ansprüche, bei der die Angussbuchse und der Mitnehmer zueinander beweglich sind.

6. Vorrichtung nach Anspruch 5 mit elastischen Mitteln (13), insbesondere Tellerfedern, zur Aufbringung einer Kraft auf den Mitnehmer zur Bewegung des Mitnehmers relativ zu der Angussbuchse.

7. Vorrichtung nach Anspruch 5 oder 6, bei der der Mitnehmer zur formschlüssigen Aufnahme des Prüfkörpers ausgebildet ist.

8. Vorrichtung nach Anspruch 7, bei der der Mitnehmer in einem Bereich der Kavität des Spritzgießwerkzeugs einen rauhen oder gezackten Bereich zur Herstellung des Formschluss mit dem Prüfkörper aufweist.

9. Vorrichtung nach einem der Ansprüche 1 bis 8, bei der das Spritzgießwerkzeug so ausgebildet ist, dass der in dem Spritzgießwerkzeug herstellbare Prüfkörper in einem Innenbereich gewölbt und in einem Aussenbereich plan ist.

**10.** Vorrichtung nach einem der vorhergehenden Ansprüche bei der die Mittel zur Beaufschlagung des Prüfkörpers mit einem Drehmoment einen Keil- oder Zahnriemenantrieb aufweisen.

**11.** Verfahren zur Bestimmung eines Reibungskoeffizienten mit folgenden Schritten:

    - Herstellung eines Prüfkörpers in einem Spritzgiesswerkzeug,
    - Aufbringung einer Normalkraft auf den Prüfkörper über einen Formstempel des Spritzgießwerkzeugs,
    - Beaufschlagung des Prüfkörpers mit einem Drehmoment,
    - Messung des über den Prüfkörper auf den Formstempel übertragenen Drehmoments und
    - Bestimmung des Reibungskoeffizienten aus der Normalkraft und dem übertragenen Drehmoment.

**12.** Verfahren nach Anspruch 11, bei dem der Prüfkörper mit einer planen Fläche in einem ersten Bereich und einer Wölbung in einem zweiten Bereich hergestellt wird.

**13.** Verfahren nach Anspruch 11 oder 12 wobei die Normalkraft pneumatisch erzeugt wird.

**14.** Verfahren nach Anspruch 11, 12 oder 13, bei dem die Normalkraft vorgegeben ist und das übertragene Drehmoment mit einer Datenerfassungseinrichtung registriert wird.

**15.** Verfahren nach einem der Ansprüche 11 bis 14, wobei sich der Zeitraum der Erfassung des übertragenen Drehmoments auf den Zeitraum des Übergangs von der Haft- in die Gleitreibung zwischen dem Formstempel und dem Prüfkörper erstreckt.

**16.** Verfahren nach einem der Ansprüche 11 bis 15, bei dem der Prüfkörper in einem Randbereich eine gezahnte oder rauhe Kontur zur Bildung eines Formflusses mit einem Formnest des Spritzgießwerkzeuges aufweist.

**17.** Verfahren nach einem der Ansprüche 11 bis 16, wobei das Drehmoment im Spritzgießprozess über den Kontakt zwischen dem Prüfkörperspritzling und dem Formstempel übertragen wird.

**18.** Verfahren nach einem der Ansprüche 11 bis 17, bei dem vor der Beaufschlagung des Prüfkörpers mit einem Drehmoment ein Anguss des Prüfkörpers entfernt wird.

**19.** Verfahren nach Anspruch 18, bei dem die Entfernung des Angusses durch eine Relativbewegung eines Mitnehmers, über den das Drehmoment in den Prüfkörper einleitbar ist, und einer Angussbuchse des Spritzgießwerkzeuges erfolgt.

**20.** Anwendung des Verfahrens zur Ermittlung eines Reibungskoeffizienten gemäß einem der Patentansprüche 11 bis 19 zur Ermittlung der zur Entformung eines beliebigen Formteiles aus einem Spritzgiesswerkzeug erforderlichen Kraft.

**Claims**

**1.** Apparatus for determining a coefficient of friction including an injection moulding tool affording a cavity for receiving a test body (20), wherein the injection moulding tool includes a mould punch (1) and a mould cavity (9) having a carrier (10) and a sprue bushing (11) so that the test body (20) may be produced in the cavity defined by the carrier (10), the sprue bushing (11) and the mould punch (1), and including means (4) for applying a normal force to a test body (20) via the mould punch (1), means for applying a torque via the carrier (10) to the test body and means for measuring the torque transmitted via the test body to the mould punch.

**2.** Apparatus as claimed in claim 1, in which the normal force is transmitted by a pneumatic system to the mould punch (1).

**3.** Apparatus as claimed in claim 1 or 2, including means (3) for measuring the normal force.

**4.** Apparatus as claimed in one of the preceding claims including a data acquisition device for acquiring torque measurement data supplied by the means for measuring.

**5.** Apparatus as claimed in one of the preceding claims in which the sprue bushing and the carrier are movable with respect to one another.

**6.** Apparatus as claimed in claim 5 including elastic means (13), particularly plate springs, for applying a force to the carrier to move the carrier relative to the sprue bushing.

**7.** Apparatus as claimed in claim 5 or 6, in which the carrier is constructed for the positive engagement reception of the test body.

**8.** Apparatus as claimed in claim 7, in which in a region of the cavity in the injection moulding tool, the carrier has a rough or jagged region for producing the positive engagemtn with the test body.

**9.** Apparatus as claimed in one of claims 1 to 8, in which the injection moulding tool is so constructed that the test body producible in the injection moulding tool is domed in an inner region and is flat in an outer region.

10. Apparatus as claimed in one of the preceding claims, in which the means for applying a torque to the test body has a V belt or tooth belt drive.

11. A method of determining a coefficient of friction including the following steps:

- producing a test body in an injection moulding tool,
- applying a normal force to the test body via a mould punch of the injection moulding tool,
- applying a torque to the test body,
- measuring the torque transmitted via the test body to the mould punch and
- determining the coefficient of friction from the normal force and the transmitted torque.

12. A method as claimed in claim 11, in which the test body is produced with a flat surface in a first region and a curvature in a second region.

13. A method as claimed in claim 11 or 12, wherein the normal force is produced pneumatically.

14. A method as claimed in claim 11, 12 or 13, in which the normal force is predetermined and the transmitted torque is recorded with a data acquisition device.

15. A method as claimed in one of claims 11 to 14, wherein the period in which the transmitted torque is detected extends into the period of the transition from static friction to sliding friction between the mould punch and the test body.

16. A method as claimed in one of claims 11 to 15, in which the test body has a toothed or rough contour in an edge region for forming a positive engagement with a mould cavity of the injection moulding tool.

17. A method as claimed in one of claims 11 to 16, wherein the torque is transmitted in the injection moulding process via the contact between the injection moulded component and the mould punch.

18. A method as claimed in one of claims 11 to 17, in which before applying a torque to the test body, a sprue on the test body is removed.

19. A method as claimed in claim 18, in which the removal of the sprue is effected by relative movement of a carrier, via which the torque may be introduced into the test body, and a sprue bushing of the injection moulding tool.

20. Use of the method for determining a coefficient of friction as claimed in one of claims 11 to 19 for determining the force necessary for demoulding any desired moulded component from an injection moulding tool.

**Revendications**

1. Dispositif pour déterminer un coefficient de frottement, comprenant un outil de moulage par injection qui comporte une cavité pour l'admission d'une éprouvette (20), l'outil de moulage par injection incluant un poinçon de formage (1) et une cavité de moulage (9) comprenant un dispositif d'entraînement (10) et une buse d'injection (11), de sorte que l'éprouvette (20) est apte à être produite dans la cavité au moyen du dispositif d'entraînement (10), de la buse d'injection (11) et du poinçon de formage (1), ce dispositif comprenant en outre des moyens (4) pour appliquer un effort normal sur une éprouvette (20) par l'intermédiaire du poinçon de formage (1), des moyens permettant de soumettre l'éprouvette à un couple, et des moyens (2) de mesure du couple transmis par l'éprouvette sur le poinçon de formage.

2. Dispositif selon la revendication 1, dans lequel l'effort normal est transmis de façon pneumatique sur le poinçon de formage (1).

3. Dispositif selon la revendication 1 ou la revendication 2, comprenant des moyens (3) de mesure de l'effort normal.

4. Dispositif selon l'une des revendications précédentes, comprenant un appareil d'acquisition de données pour l'enregistrement de données de mesure du couple fournies par les moyens de mesure.

5. Dispositif selon l'une des revendications précédentes, dans lequel la buse d'injection et le dispositif d'entraînement sont mobiles l'une par rapport à l'autre.

6. Dispositif selon la revendication 5, comprenant des moyens élastiques (13), en particulier des rondelles élastiques, pour l'application d'une force sur le dispositif d'entraînement permettant le mouvement du dispositif d'entraînement par rapport à la buse d'injection.

7. Dispositif selon la revendication 5 ou la revendication 6, dans lequel le dispositif d'entraînement est conçu pour que l'admission de l'éprouvette soit réalisée par liaison mécanique.

8. Dispositif selon la revendication 7, dans lequel le dispositif d'entraînement présente une zone rugueuse ou dentelée dans une zone de la cavité de l'outil de moulage par injection afin de réaliser une liaison mécanique avec l'éprouvette.

9. Dispositif selon l'une des revendications 1 à 8, dans lequel l'outil de moulage par injection est conçu de telle sorte que l'éprouvette étant apte à être produite dans l'outil de moulage par injection est courbée sur une portion intérieure et plane sur une portion extérieure.

10. Dispositif selon l'une des revendications précédentes, dans lequel les moyens permettant de soumettre l'éprouvette à un couple comprennent une transmission par courroie trapézoïdale ou par courroie crantée.

11. Procédé de détermination d'un coefficient de frottement comprenant les étapes suivantes :

   - production d'une éprouvette dans un outil de moulage par injection,
   - application d'un effort normal sur l'éprouvette par l'intermédiaire d'un poinçon de formage de l'outil de moulage par injection,
   - soumission de l'éprouvette à un couple,
   - mesure du couple transmis par l'éprouvette sur le poinçon de formage, et
   - détermination du coefficient de frottement à partir de l'effort normal et du couple transmis.

12. Procédé selon la revendication 11, dans lequel l'éprouvette est conçue de manière à présenter une surface plane sur une première portion et une forme courbe sur une deuxième portion.

13. Procédé selon la revendication 11 ou la revendication 12, dans lequel l'effort normal est transmis de façon pneumatique.

14. Procédé selon l'une des revendications 11, 12 ou 13, dans lequel l'effort normal est prédéterminé et dans lequel le couple transmis est enregistré avec un appareil d'acquisition de données.

15. Procédé selon l'une des revendications 11 à 14, dans lequel la période d'enregistrement du couple transmis s'étend jusqu'à la période de transition d'un état d'adhérence à un état de frottement entre le poinçon de formage et l'éprouvette.

16. Procédé selon l'une des revendications 11 à 15, dans lequel l'éprouvette présente un profil rugueux ou dentelé dans une zone de bordure afin de créer une liaison mécanique avec une cavité de moulage de l'outil de moulage par injection.

17. Procédé selon l'une des revendications 11 à 16, dans lequel le couple est transmis dans le procédé de moulage par injection par contact entre l'éprouvette moulée par injection et le poinçon de formage.

18. Procédé selon l'une des revendications 11 à 17, dans lequel une carotte de l'éprouvette est retirée avant de soumettre l'éprouvette à un couple.

19. Procédé selon la revendication 18, dans lequel le retrait de la carotte est effectué par un mouvement relatif d'un dispositif d'entraînement, par l'intermédiaire duquel le couple est apte à être transmis à l'éprouvette, et d'une buse d'injection de l'outil de moulage par injection.

20. Utilisation du procédé de détermination d'un coefficient de frottement selon l'une des revendications 11 à 19 pour déterminer la force nécessaire au démoulage d'une pièce moulée arbitraire hors d'un outil de moulage par injection.

FIG.1

FIG.2

Reizschwelle

2 s

FIG.3

FIG.4

FIG.5

20

$r_m$

$r_i$

$r_a$

20

23

22

23

FIG.6

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P.A. Dearnley.** Low friction surfaces for plastic injection moulding dies - an experimental case study. *WEAR,* 1999, vol. 225-229, 119-1113

- **G. Menges et al.** Messung von Haftreibungskoeffizienten zur Ermittlung von Offnungs- und Entformungskräften bei Spritzgießwerkzeugen. *Kunststoffe,* 1981, vol. 71 (9), 552-557